# EUROPEAN PATENT SPECIFICATION

(11) **EP 1 795 785 B1**
(45) Date of publication and mention of the grant of the patent: **14.11.2012**
(21) Application number: 05774602.6
(22) Date of filing: 23.08.2005
(51) Int. Cl.: F16J 15/08, C21D 6/00, C21D 9/00, C22C 38/00, C22C 38/58, F02F 11/00

(54) **METHOD OF MANUFACTURING METAL GASKET**
VERFAHREN ZUR HERSTELLUNG EINER METALLDICHTUNG
METHODE DE FABRICATION D'UN JOINT METALLIQUE

(30) Priority: 24.08.2004 JP 2004243898
(43) Date of publication of application: 13.06.2007
(73) Proprietor: NIPPON LEAKLESS INDUSTRY Co., Ltd., Minato-ku, Tokyo 105-0004 (JP); HONDA MOTOR CO., LTD., Tokyo 107-8556 (JP)
(72) Inventor: SASAKI, Hiromitsu c/o NIPPON LEAKLESS IND.CO.LTD., Saitama-shi, Saitama 3360931 (JP); MISUMI, Norifumi c/o NIPPON LEAKLESS IND. CO.LTD., Saitama-shi, Saitama 3360931 (JP); YAJIMA, Takashi c/o NIPPON LEAKLESS IND. CO. LTD., Saitama-shi, Saitama 3360931 (JP); MIYASHITA, Masabumi, Saitama-shi, Saitama 3360931 (JP); KATSURAI, Takashi, Chuo 1-chome, Wako-shi, Saitama 3510193 (JP); NISHIYAMA, Tadao, Chuo 1-chome, Wako-shi, Saitama 3510193 (JP); MURAKAMI, Yasunori, Chuo 1-chome, Wako-shi, Saitama 3510193 (JP)
(74) Representative: Paget, Hugh Charles Edward
(86) International application number: PCT/JP2005/015252
(87) International publication number: WO 2006/022247

(56) References cited:
- JP-A- 6 228 641
- JP-A- 7 253 161
- JP-A- 2000 000 919
- JP-A- 2000 127 199

## Description

### TECHNICAL FIELD

The present invention relates to a method of manufacturing a metal gasket, which is particularly suitable for manufacturing a cylinder head metal gasket of an internal combustion engine.

### BACKGROUND ART

As a metal gasket, there has been known, for example, a cylinder head metal gasket including at least one base plate, as a single base plate or a plurality of stacked base plates. Specifically, the base plate is formed by providing a rubber coating layer on a surface of a stainless steel plate as a metal plate. Moreover, the base plate has cylinder holes as fluid passage holes formed so as to correspond to respective cylinder bores in a cylinder block of an internal combustion engine, and circular beads which are formed around the respective cylinder holes and each of which has a sectional shape like that of an angle bar.

The cylinder head metal gasket is inserted between deck planes of the cylinder block and the cylinder head of the internal combustion engine, and is fastened with fastening bolts used for fixing the cylinder head to the cylinder block. Accordingly, the circular beads are elastically crushed to be firmly fixed to the deck planes of the cylinder head and the cylinder block by repulsion. Thus, a sealing line is formed around the cylinder holes corresponding to the respective cylinder bores, and high-temperature and high-pressure fuel gas in the cylinder bores is prevented from leaking out to the outside. Along with higher output of the internal combustion engine and increase in maximum pressure of the fuel gas, the following method has been commonly used. Specifically, a step structure is formed by stacking, on the base plate, an auxiliary plate in which a thickness in a portion corresponding to the circular bead of the base plate is set larger than that in a gasket peripheral portion. Thus, sealing performance is improved by increasing linear pressure of the circular beads. Moreover, the rubber coating layer provided on the surface of the stainless steel plate forming the metal gasket plays a role of increasing the sealing performance of the circular beads by entering into and filling minute tool marks or scars left in the deck planes of the cylinder head and the cylinder block.

Meanwhile, in recent years, along with reduction in weight and size of the internal combustion engine, there has been requested a metal gasket which-can seal the maximum pressure of the high-pressure fuel gas even if the linear pressure of the circular beads is lowered by reducing a necessary step amount or removing the step in the step structure described above. In order to meet this request, if a metal plate having high hardness is used and a rise angle of the circular bead is increased so as not to break the circular beads even when crushed, cracks and minute roughness occur in hem portions of the circular beads in press-working of the circular beads. Thus, there arises the following problem. Specifically, the minute roughness could be turned into cracks when an alternate load is applied thereto by repetition of so-called dilation in which a gap between the deck planes of the cylinder block and the cylinder head is increased or reduced by repeated pressure of the fuel gas after the gasket is mounted in the internal combustion engine.

Accordingly, in International Publication WO02/088410, the applicant of the present application has previously proposed the following. Specifically, as a metal plate of a base plate, used is a stainless steel plate having low-temperature age-hardening characteristics, in which hardness thereof is low at the beginning but is increased after age-hardening at a temperature of about 200°C to 350°C, which is relatively low as an aging temperature. Moreover, by performing press-working of the circular beads before heating (burning) of the rubber coating layer, the low hardness is used in the press-working of the circular beads. Thus, occurrence of cracks and roughness in the circular bead portion is prevented. Furthermore, by age-hardening the metal plate in conjunction with the subsequent heating of the rubber coating layer, the metal gasket having the circular beads which are hardly broken (collapsed) even when crushed is realized.

### SUMMARY OF THE INVENTION

### Problems to be Solved by the Invention

After further studies conducted on the conventional metal gasket manufacturing method described above, the inventors of the present application have found out the following points, in which improvement is desired. Specifically, in the metal gasket for the internal combustion engine, since crushing and slight restoration of the circular beads are repeated by repetition of dilation caused by the above described repeated pressure of the fuel gas, slight reciprocating slide (so-called fretting) in the extending direction of the gasket occurs in the circular beads. Thus, if the rubber coating layer is not firmly attached to the metal plate of the base plate, the rubber material in a part of the:rubber coating layer may be released from the metal plate. Consequently, there is a possibility that mixing of the released rubber material in the cooling water clogs a narrow portion of a cooling water passage and lowers cooling performance.

Thus, the recent metal gasket may be manufactured in the following manner. Specifically, by continuous processing, first, a base coat is applied to a surface of a stainless steel plate reeled out from a coil material (hoop material), and the base coat is heated for about 60 seconds at about 300°C to be burned. After an adhesive is applied onto the base coat and is heated for about 90 seconds at about 150°C to be dried, the adhesive is heated for about 90 seconds at about 300°C to be burned. Subsequently, after a rubber material is applied onto the adhesive and is heated for about 90 seconds at about 150°C to be dried, the rubber material is heated for about 90 seconds at about 270°C to be burned. Thus, a rubber coating layer is firmly attached to the stainless steel plate. Thereafter, PTFE (polytetrafluoroethylene) for wear prevention is applied onto the rubber coating layer and is heated for about 10 seconds at about 100°C to be dried. Finally, the stainless steel plate is cut into a predetermined size to obtain a blank material for press forming of the base plate.

From the above, the following has been found out. Even if press working (forming) of the circular beads is performed before heating of the rubber coating layer, if the press working is performed after the base coat burning or adhesive burning, the stainless steel plate is already age-hardened by the burning. Thus, there is a possibility that occurrence of cracks and roughness in hem portions of the circular beads cannot be effectively prevented. Moreover, the aging temperature of the metal plate is preferably set low since coarse deposits leading to fatigue fracture are easily caused if the temperature is too high. As described above, heating of the rubber coating layer is normally performed at 250°C or higher. Meanwhile, the base coat burning is even done by heating for about 1 minute at 200°C or higher and lower than 250°C. Moreover, once the stainless steel plate is age-hardened, reheating thereof at a somewhat high temperature has actually no influence thereon.

### Means for Solving the Problems

It is an object of the present invention to advantageously solve the foregoing problems of the conventional technology based on the foregoing knowledge of the inventors of the present application. A metal gasket manufacturing method of the present invention is a method of manufacturing a metal gasket including a base plate having at least fluid passage holes and circular beads surrounding the fluid passage holes, the base plate being formed by providing a rubber coating layer on a surface of a metal plate with a base coat and an adhesive interposed therebetween. The method includes the steps of: by use of a metal plate having low-temperature age-hardening characteristics as the metal plate of the base plate, applying the base coat to the metal plate of the base plate and drying the base coat at a temperature lower than a low aging temperature of the metal plate; performing press-working of the circular beads on the metal plate; and age-hardening the metal plate while burning the base coat at the low aging temperature of the metal plate of the base plate.

### Effects of the Invention

According to the metal gasket manufacturing method of the present invention, the metal plate having the low-temperature age-hardening characteristics is used as the metal plate of the base plate formed by providing the rubber coating layer on the surface of the metal plate with the base coat and the adhesive interposed therebetween. The base coat is applied to the metal plate of the base plate, and the base coat is fixed to some extent by drying at the temperature lower than the low aging temperature of the metal plate. Subsequently, after press-working of the circular beads is performed on the metal plate,-the metal plate is age-hardened while burning the base coat at the low aging temperature of the metal plate of the base plate. Thus, since the press-working of the circular beads is performed on the metal plate in the state where the hardness is still low, even if the rise angle of the circular beads is increased, it is possible to effectively prevent occurrence of cracks and roughness in hem portions of the circular beads. Moreover, the hardness is increased by age-hardening the metal plate in conjunction with the subsequent base coat burning. Thus, it is possible to realize the metal gasket having the circular beads which are hardly broken even when crushed.

Moreover, according to the metal gasket manufacturing method of the present invention, by use of the metal plate having the low-temperature age-hardening characteristics, ageing treatment is performed by base coat burning which can lower the temperature compared with heating of the rubber coating layer. Thus, it is possible to realize the metal gasket which can prevent occurrence of coarse deposits leading to fatigue fracture and has an excellent durability.

Furthermore, if there is already a convex portion of the circular bead in the metal plate when the base coat is applied, the base coat before drying is likely to flow along a slope of the convex portion. Accordingly, the base coat is likely to be accumulated around a bottom of the convex portion. Thus, the state of the base coat applied tends to be varied. On the other hand, according to the metal gasket manufacturing method of the present invention, after the base coat is applied to the flat metal plate and is fixed to some extent by drying, the press-working of the circular beads is performed on the metal plate. Accordingly, there is no dripping or accumulation of the base coat compared with the case where the base coat is applied after the press-working of the circular beads is performed on the metal plate. Thus, there is no variation in the state of the base coat applied. Consequently, adhesive strength of the rubber coating layer can always be set stable.

Note that, in the metal gasket manufacturing method of the present invention, it is preferable that presetting of the circular beads be performed after the metal plate is age-hardened while burning the base coat at the low aging temperature of the metal plate of the base plate. Accordingly, burning of the base coat is done before presetting in which the circular beads, which are press-formed in the blank plate, are pressed once by use of a press die and are returned by repulsion force of those beads. Thus, it is possible to prevent peeling of the base coat due to rubbing against the press die in the presetting.

Moreover, in the metal gasket manufacturing method of the present invention, it is preferable that, in the case where the metal gasket further includes an auxiliary plate which is made of a metal plate having no rubber coating layer and has at least fluid passage holes and circular beads surrounding the fluid passage holes, the metal plate having the low-temperature age-hardening characteristics be used as the metal plate of the auxiliary plate, and the metal plate be age-hardened at the low aging temperature of the metal plate of the auxiliary plate after press-working of the circular beads on the metal plate of the auxiliary plate. Accordingly, stacking of the circular beads of the base plate on the circular beads of the auxiliary plate makes it possible to increase an amount of elastic crushing in a circular bead portion of the gasket without increasing much rise angles of the respective circular beads of the base plate and the auxiliary plate. Moreover, even if a gap between gasket mounting planes is increased by high pressure in the fluid passage holes, linear pressure of the circular beads can be maintained to achieve high sealing performance.

Furthermore, in the metal gasket manufacturing method of the present invention, it is preferable that, as conditions of ageing treatment for the metal plate having the low-temperature age-hardening characteristics, the temperature be set to not less than 200°C and less than 250°C, and the length of time be set to 1 to 5 minutes. Accordingly, the ageing treatment is performed by base coat burning using a -temperature lower than that of heating of the rubber coating layer. Thus, it is possible to realize a metal gasket which can prevent occurrence of coarse deposits leading to fatigue fracture and has an excellent durability.

Furthermore, in the metal gasket manufacturing method of the present invention, it is preferable that the metal plate having the low-temperature age-hardening characteristics be a metastable austenitic stainless steel plate (for example, a complex structure including 40% or more of martensite, by an area ratio, and remnant austenite, or a martensitic single-phase structure) which induces a great deal of martensitic transformation by temper rolling at the final stage of manufacturing of the metal plate. Since the stainless steel plate is relatively cheap and, by ageing treatment at a relatively low temperature, chrome nitride is separated out from martensitic phases induced by temper rolling. Thus, if a large amount of the martensitic phases are induced, the stainless steel plate after age-hardening can have very high hardness of HV500 or more compared with the stainless steel plate before age-hardening which has hardness of about HV480.

Furthermore, in the metal gasket manufacturing method of the present invention, it is preferable that the metal gasket be a metal gasket for a cylinder head of an internal combustion engine. In the metal gasket for the cylinder head of the internal combustion engine, particularly, the circular beads are easily broken due to exposure to high-temperature and high-pressure fluid gas. On the other hand, if the gasket is manufactured by use of the method of the present invention, it is possible to realize a gasket which can maintain high sealing performance for a long period of time even under the severe conditions as described above.

### BRIEF DESCRIPTION OF THE DRAWINGS

FIG. 1 is a process diagram showing an example of applying a metal gasket manufacturing method of the present invention to the steps of manufacturing a cylinder head metal gasket of an internal combustion engine.
FIG. 2 is a cross-sectional view showing a cross-sectional shape, from a cylinder hole to a gasket periphery, of the cylinder head metal gasket manufactured by use of the metal gasket manufacturing method of the example.
FIG. 3 is a diagram showing a relationship between an aging temperature and hardness of a stainless steel plate as a metal plate having low-temperature age-hardening characteristics, which is used in the metal gasket manufacturing method of the example.
FIG. 4 (a) shows a result of testing of test pieces in tension in a normal state, FIG. 4 (b) shows a result of testing of the test pieces in tension, which is performed at room temperature after the test pieces are immersed for 120 hours in an immersion liquid (100°C) containing 50% of a long life coolant (LLC) "CCI" for an engine coolant and 50% of water, and FIG. 4 (c) shows a result of testing of the test pieces in tension, which is performed at room temperature after the test pieces are immersed for 120 hours in an immersion liquid (100°C) containing 100% of the long life coolant "CCI".
FIG. 5 (a) shows a result of testing of the test pieces in tension, which is performed at room temperature after the test pieces are immersed for 120 hours in warm water (95°C), and FIG. 5 (b) shows a result of testing of the test pieces in tension, which is performed at room temperature after the test pieces are left in the air of 200°C for 72 hours.

### DESCRIPTION OF THE PREFERRED EMBODIMENTS

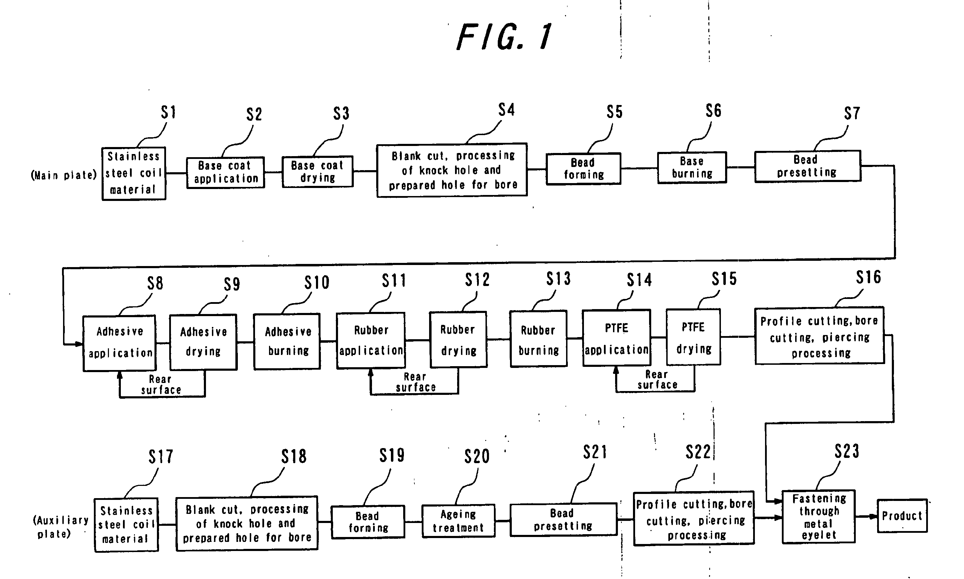

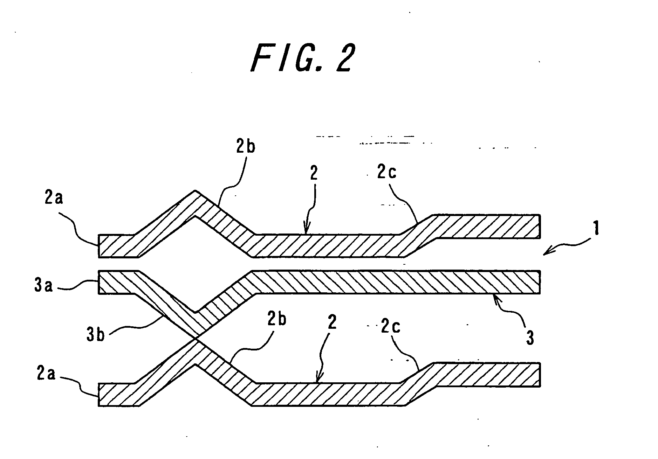

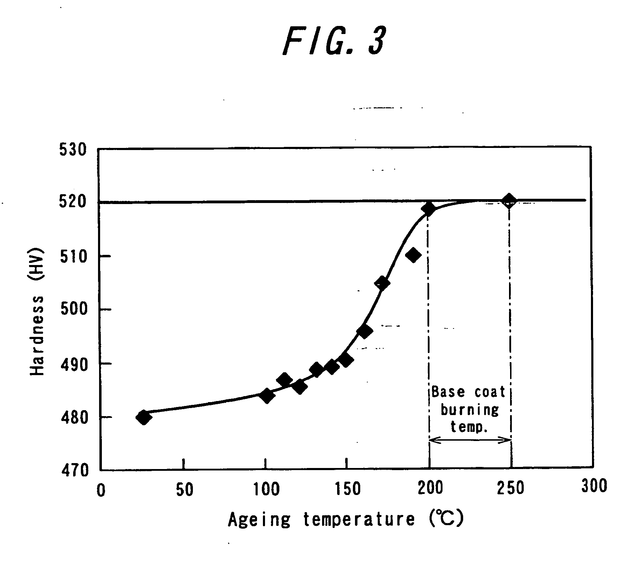

With reference to the drawings, an embodiment of the present invention will be described in detail below by use of examples. Here, FIG. 1 is a process diagram showing an example of applying a metal gasket manufacturing method of the present invention to the steps of manufacturing a cylinder head metal gasket of an internal combustion engine. FIG. 2 is a cross-sectional view showing a cross-sectional shape, from a cylinder hole to a gasket periphery, of the cylinder head metal gasket manufactured by use of the metal gasket manufacturing method of the example. FIG. 3 is a diagram showing a relationship between an aging temperature and hardness of a stainless steel plate as a metal plate having low-temperature age-hardening characteristics, which is used in the metal gasket manufacturing method of the example. In FIG. 2, reference numeral 1 denotes a metal gasket, reference numeral 2 denotes a main plate as a base plate, and reference numeral 3 denotes an auxiliary plate.

As shown in FIG. 2, a cylinder head metal gasket 1 manufactured by use of the method of the example described above includes two main plates 2 as base plates which are stacked on each other in a state where corresponding beads protrude in the same direction. Each of the main plates 2 is made of a stainless steel plate (for example, a metastable austenitic stainless steel plate which has a thickness of 0.2 mm and has a basic composition equivalent to SUS 301L) which has low-temperature age-hardening characteristics. Specifically, on both surfaces of outward and inward planes of the stainless steel plate, rubber coating layers are provided, each of which has a thickness of, for example, 15 µm and is made of NBR having hardness of 81Hs (shore hardness). Moreover, the main plate 2 has: a plurality of cylinder holes 2a which are formed so as to correspond to a plurality of cylinder bores in a cylinder block of an internal combustion engine; circular beads 2b which are formed around the respective cylinder holes 2a and each of which has an angle sectional shape (so-called full bead shape); a plurality of unillustrated cooling water holes which are formed in outer peripheral portions of the respective circular beads 2b so as to correspond to positions of cooling water holes of a cooling water jacket and a cylinder head in the cylinder block of the internal combustion engine; and peripheral beads 2c which are formed in positions to entirely surround the plurality of circular beads 2b and the plurality of cooling-water holes positioned therearound, and each of which has a cross-sectional shape with a slope on one side (so-called half bead shape).

Furthermore, as shown in FIG. 2, the cylinder head metal gasket 1 manufactured by use of the method of the example described above includes one auxiliary plate 3 which is sandwiched between the two main plates 2. This auxiliary plate 3 is made of a stainless steel plate (for example, a metastable austenitic stainless steel plate which has a thickness of 0.15 mm and has a basic composition equivalent to SUS 301L) which does not have rubber coating layers on both surfaces thereof but has the same low-temperature age-hardening characteristics as those of the main plate 2. As in the case of the main plate 2, the auxiliary plate 3 has: a plurality of cylinder holes 3a which are formed so as to correspond to the plurality of cylinder bores in the cylinder block of the internal combustion engine; circular beads 3b which are formed around the respective cylinder holes 2a and each of which has an angle sectional shape (so-called full bead shape); and a plurality of unillustrated cooling water holes which are formed in outer peripheral portions of the respective circular beads 3b so as to correspond to the positions of the cooling water holes of the cooling water jacket and the cylinder head in the cylinder block of the internal combustion engine. However, the auxiliary plate 3 does not have peripheral beads corresponding to the peripheral beads 2c of the main plate 2.

Note that the metastable austenitic stainless steel plate which can be used for the main plate 2 and the auxiliary plate 3 in the method of the example described above has a chemical composition substantially including, by mass%, C: 0.03% or less, Si: 1.0% or less, Mn: 2.0% or less, Cr: 16.0% to 18.0%, Ni: 6.0% to 8.0%, N: 0.25% or less, possibly Nb: 0.30% or less, remnant Fe and unavoidable impurities. Moreover, the stainless steel plate is made of a complex structure including 40% or more of martensite, by an area ratio, and remnant austenite, or a martensitic single-phase structure, which is tempered by temper rolling at the final-stage of manufacturing of the stainless steel plate. Since details thereof are described in International Publication WO02/088410 described above, description thereof will be omitted here.

In manufacturing of the cylinder head metal gasket 1 having the three-layer structure, the metal gasket manufacturing method of the example includes the following steps. Specifically, as shown in FIG. 1, for the main plate 2, first, the stainless steel plate is continuously reeled out from a stainless steel coil material (hoop material) in Step S1. Thereafter, in Step S2, a base coat made of a normal material is applied to both surfaces of the stainless steel plate by use of a roller. Subsequently, in Step S3, the base coat is continuously dried by heating for 90 seconds at 100°C to be roughly fixed to the both surfaces of the stainless steel plate. Next, in Step S4, by use of a progressive press die, the stainless steel plate is continuously cut into a blank plate (blank cut) which has a predetermined size corresponding to the individual main plate 2. Moreover, the blank plate is press-worked to have knock holes and prepared holes for bore for positioning in the subsequent step.

In the subsequent steps, the above continuous processing is switched to batch processing. Next, in Step S5, by use of a press die, the circular beads 2b are press-formed around the respective bore lower holes in the blank plate. At the same time, the peripheral beads 2c are press-formed in a peripheral part of the blank plate. Subsequently, in Step S6, the blank plate is heated for 1 minute at 200°C to burn the base coat on the both surfaces of the blank plate. At the same time, the blank plate is age-hardened. Here, as shown in FIG. 3, the stainless steel plate is set to have Vickers hardness of approximately HV520 by heating for about 1 to 5 minutes at an aging temperature of 200°C to 250°C. Thus, the blank plate and therefore the main plate 2 is set to have a very high hardness of HV520 by the heating.

Next, in the method of the example, in Step S7, presetting is performed, in which the respective circular beads 2b and peripheral beads 2c, which have been press-formed in the blank plate, are pressed once by use of a press die and are returned by repulsion force of those beads. Note that, in the method of the example, since burning of the base coat is done before the presetting, there is no need to worry about peeling of the base coat in the presetting. Next, in the method, in Step S8, an adhesive made of a normal material is applied to the base coat on one surface of the blank plate. Subsequently, in Step S9, the applied adhesive is heated for 10 minutes at 130°C to be dried, and is once again returned to Step S8. This time, the adhesive is applied to the base coat on the other surface of the blank plate. Subsequently, in Step S9, the applied adhesive is heated for 10 minutes at 130°C to be dried. Thereafter, in Step S10, the adhesive on the base coat on the both surfaces is heated for 5 minutes at 200°C to be burned.

Next, in the method, in Step S11, first, a rubber material made of a material as described above is applied to the adhesive on the one surface of the blank plate. Thereafter, in Step S 12, the applied rubber material is heated for 30 minutes at 130°C to be dried, and is once again returned to Step S11. This time, the rubber material is applied to the adhesive on the other surface of the blank plate. Subsequently, in Step S12, the applied rubber material is heated for 30 minutes at 130°C to be dried. Thereafter, in Step S13, the rubber material on the adhesive on the both surfaces is heated for 5 minutes at 250°C to be burned. Thus, rubber coating layers are formed, which are firmly attached onto the both surfaces of the blank plate.

Next, in the method, in Step S14, first, polytetrafluoroethylene (PTFE) made of a normal material is applied to the rubber coating layer on the one surface of the blank plate. Thereafter, in Step S15, the applied PTFE is heated for 10 seconds at 100°C to be dried, and is once again returned to Step S14. This time, the PTFE is applied to the rubber coating layer on the other surface of the blank plate. Subsequently, in Step S15, the applied PTFE is heated for 10 seconds at 100°C to be dried. Thereafter, in Step S16, the blank plate is cut into an external shape of the main plate 2 by use of a press die, and the respective cylinder holes 2a are formed by cutting the main plate 2. Furthermore, the cooling water holes, bolt holes for clamping bolts, metal eyelet holes and the like are formed by piercing.

Meanwhile, as to the auxiliary plate 3, since no rubber coating layer is provided, first, as in the case of Step S1 described above, the stainless steel plate is continuously reeled out from the stainless steel coil material (hoop material) in Step S17. Thereafter, in Step S18, as in the case of Step S4, by use of the progressive press die, the stainless steel plate is continuously cut into a blank plate (blank cut) which has a predetermined size corresponding to the individual auxiliary plate 3. Moreover, the blank plate is press-worked to have knock holes and prepared holes for bore for positioning in the subsequent step.

In the subsequent steps, the above continuous processing is switched to batch processing. Next, in Step S19, as in the case of Step S5 described above, by use of the press die, the circular beads 3b are press-formed around the respective bore lower holes in the blank plate. Thereafter, in Step S20, as in the case of Step S6 described above, the blank plate is heated for 1 minute at 200°C to age-harden the blank plate. Here, as shown in FIG. 3, the stainless steel plate is set to have Vickers hardness of approximately HV520 by heating for about 1 to 5 minutes at the aging temperature of 200°C to 250°C. Thus, the blank plate and therefore the auxiliary plate 3 is set to have a very high hardness of HV520 by the heating.

Next, in the method of the example, in Step S21, as in the case of Step S7 described above, presetting is performed, in which the respective circular beads 3b, which are press-formed in the blank plate, are pressed once by use of a press die and are returned by repulsion force of those beads. Note that, in the method of the example, since burning of the base coat is done before the presetting, there is no need to worry about peeling of the base coat in the presetting. Next, in the method, in Step S22, as in the case of Step S16 described above, the blank plate is cut into an external shape of the auxiliary plate 3 by use of a press die, and the respective cylinder holes 3a are formed by piercing the auxiliary plate 3. Furthermore, the cooling water holes, bolt holes for clamping bolts, metal eyelet holes and the like are formed by piercing.

After the main plate 2 and the auxiliary plate 3 are formed as described above, in Step S23, two of the main plates 2 are stacked on each other in a state where the corresponding circular beads 2b and peripheral beads 2c protrude in the same direction (upward in FIG. 2). At the same time, the auxiliary plate 3 is inserted between the main plates 2 in a state where the circular beads 3b protrude in the opposite direction (downward in FIG. 2) to the circular beads 2b of the main plates 2. Thereafter, those three gasket forming plates 2 and 3 are fixed by fastening through metal eyelets. Thus, the cylinder head metal gasket as shown in FIG. 2 is formed.

According to the metal gasket manufacturing method of the example, the metastable austenitic stainless steel plate having the low-temperature age-hardening characteristics is used as the stainless steel plate of the main plate 2 which is formed by providing the rubber coating layers on the surfaces of the stainless steel plate with the base coat and the adhesive interposed therebetween. After the base coat is applied to the stainless steel plate of the main plate 2 and is fixed to some extent by drying at 100°C, which is lower than the low aging temperature of the stainless steel plate, the stainless steel plate is press-worked to have the circular beads 2b. Thereafter, the stainless steel plate is age-hardened while burning the base coat at 200°C which is within the range of the low aging temperature of the stainless steel plate of the main plate 2. Since the stainless steel plate is press-worked to have the circular beads 2b in the state where the hardness is still as low as about HV480, even if a rise angle of the circular bead 2b is increased, it is possible to effectively prevent occurrence of cracks and roughness-in a hem portion of the circular bead 2b. Accordingly, the hardness is increased to about HV 520 by age-hardening the stainless-steel plate in conjunction with the subsequent burning of the base coat. Thus, it is possible to realize the metal gasket having the circular beads 2b which are hardly broken even when crushed.

Moreover, according to the metal gasket manufacturing method of the example, by use of the stainless steel plate having the low-temperature age-hardening characteristics, ageing treatment is performed by base coat burning which can lower the temperature compared with heating of the rubber coating layer. Thus, it is possible to realize a metal gasket which can prevent occurrence of coarse deposits leading to fatigue fracture and has an excellent durability.

Furthermore, according to the metal gasket manufacturing method of the example, after the base coat is applied to the flat stainless steel plate and is fixed to some extent by drying, the stainless steel plate is press-worked to have the circular beads 2b.
Accordingly, there is no dripping or accumulation of the base coat compared with the case where the base coat is applied after the stainless steel plate is press-worked to have the circular beads 2b. Thus, there is no variation in the state of the base coat applied. Consequently, adhesive strength of the rubber coating layer can always be set stable.

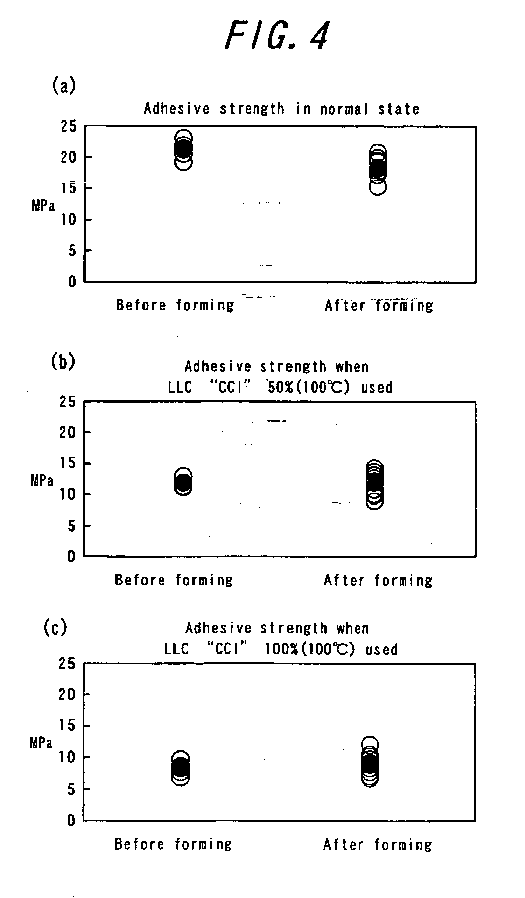

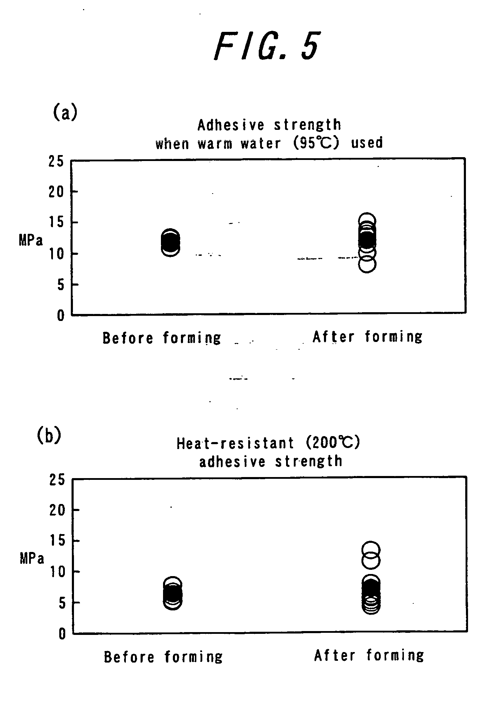

FIGS. 4 (a) to 4 (c) and FIGS. 5 (a) and 5 (b) show adhesive strength as a result of testing of the following test pieces in tension under various conditions, the test pieces including: a plurality of test pieces corresponding to application before forming (shown as "before forming"), in which a base coat is evenly applied onto a flat stainless steel plate and a rubber coating layer is attached thereto by use of an adhesive, in accordance with a metal gasket formed by performing base coat application before bead forming; and a plurality of test pieces corresponding to application after forming (shown as "after forming"), in which a base coat is diluted and unevenly applied onto a flat stainless steel plate and a rubber coating layer is attached thereto by use of an adhesive, in accordance with a metal gasket formed by performing base coat application after bead forming.

Here, FIG. 4(a) shows a result of testing of the test pieces in tension in a normal state. FIG. 4 (b) shows a result of testing of the test pieces in tension, which is performed at room temperature after the test pieces are immersed for 120 hours in an immersion liquid (100°C) containing 50% of a long life coolant (LLC) "CCI" for an engine coolant and 50% of water. FIG. 4 (c) shows a result of testing of the test pieces in tension, which is performed at room temperature after the test pieces are immersed for 120 hours in an immersion liquid (100°C) containing 100% of the long life coolant "CCI". Moreover, FIG. 5 (a) shows a result of testing of the test pieces in tension, which is performed at room temperature after the test pieces are immersed for 120 hours in warm water (95°C). FIG. 5 (b) shows a result of testing of the test pieces in tension, which is performed at room temperature after the test pieces are left in the air of 200°C for 72 hours.

From these testing results, it is found out that the test pieces corresponding to application before forming have stable adhesive strength compared with the test pieces corresponding to application after forming. Thus, it is apparent that, according to the metal gasket manufacturing method of the example, the adhesive strength of the rubber coating layer can always be set stable.

Furthermore, according to the metal gasket manufacturing method of the example, in the case where the metal gasket 1 further includes the auxiliary plate 3 which is made of the stainless steel plate having no rubber coating layer, and has at least the cylinder holes 3a as fluid passage holes and the circular beads 3b surrounding the cylinder holes 3a, the metastable austenitic stainless steel plate having the low-temperature age-hardening characteristics is used as the stainless steel plate of the auxiliary plate 3, and the stainless steel plate is age-hardened at 200°C which is within the range of the low aging temperature of the stainless steel plate of the auxiliary plate 3. Accordingly, stacking of the circular beads 2b of the main plate 2 on the circular beads 3b of the auxiliary plate 3 makes it possible to increase an amount of elastic crushing in a circular bead portion of the gasket 1 without increasing much rise angles of the respective circular beads 2b and 3b of the main plate 2 and the auxiliary plate 3. Moreover, even if a gap between deck planes is increased by high pressure of fuel gas in cylinder bores, linear pressure of the circular beads 2b and 3b can-be maintained to achieve high sealing performance.

Furthermore, according to the metal gasket manufacturing method of the example, as the conditions of ageing treatment for the stainless steel plate having the low-temperature age-hardening characteristics, the temperature is set to 200°C or higher and lower than 250°C, and the length of time is set to 1 to 5 minutes. Accordingly, the ageing treatment is performed by base coat burning using a temperature lower than that of heating of the rubber coating layer. Thus, it is possible to realize the metal gasket 1 which can prevent occurrence of coarse deposits leading to fatigue fracture and has an excellent durability.

Furthermore, according to the metal gasket manufacturing method of the example, the stainless steel plate having the low-temperature age-hardening characteristics is the metastable austenitic stainless steel plate (for example, a complex structure including 40% or more of martensite, by an area ratio, and remnant austenite, or a martensitic single-phase structure) which induces a great deal of martensitic transformation by temper rolling at the final stage of the manufacturing. Since the stainless steel plate is relatively cheap, material cost for the gasket can be suppressed. Moreover, by ageing treatment at a relatively low temperature, chrome nitride is separated out from martensitic phases induced by temper rolling. Thus, if a large amount of the martensitic phases are induced, the stainless steel plate after age-hardening can have very high hardness of HV500 or more compared with the stainless steel plate before age-hardening which has hardness of about HV480.

Moreover, according to the metal gasket manufacturing method of the example, the metal gasket 1 for the cylinder head of the internal combustion engine can be manufactured. In the metal gasket for the cylinder head of the internal combustion engine, particularly, the circular beads are easily broken due to exposure to high-temperature and high-pressure fluid gas. On the other hand, in the metal gasket 1 manufactured by use of the method of the example, the circular beads are not easily broken. Accordingly, high sealing performance can be achieved even at a low linear pressure. Thus, it is possible to realize a metal gasket which can maintain high sealing performance for a long period of time even under the severe conditions as described above.

Although the present invention has been described above based on the example shown in the drawings, the present invention is not limited to the example described above. For example, the metal gasket may be formed by using one or two main plates 2 without using the auxiliary plate 3. Alternatively, as a metal plate having low-temperature age-hardening characteristics, for example, an aluminum alloy plate, a copper alloy plate and the like, other than the stainless steel plate, may be used. Moreover, the metal gasket manufactured by use of the method of the present invention is not limited to one for the cylinder head but may be used for manifolds in inlet and exhaust systems of the internal combustion engine or may be used for applications other than the internal combustion engine.

### INDUSTRIAL APPLICABILITY

According to the metal gasket manufacturing method of the present invention, since the metal plate is press-worked to have the circular beads in the state where the hardness is still low, even if the rise angle of the circular beads is increased, it is possible to effectively prevent occurrence of cracks and roughness in the hem portions of the circular beads. Moreover, the hardness is increased by age-hardening the metal plate in conjunction with the subsequent base coat burning. Thus, it is possible to realize the metal gasket having the circular beads which are hardly broken even when crushed. Moreover, by use of the metal plate having the low-temperature age-hardening characteristics, ageing treatment is performed by base coat burning which can lower the temperature compared with heating of the rubber coating layer. Thus, it is possible to realize the metal gasket which can prevent occurrence of coarse deposits leading to fatigue fracture and has an excellent durability.

## Claims

1. A method of manufacturing a metal gasket including a base plate having at least fluid passage holes and circular beads surrounding the fluid passage holes, the base plate being formed by providing a rubber coating layer on a surface of a metal plate with a base coat and an adhesive interposed therebetween, the method comprising the steps of:
by use of a metal plate having low-temperature age-hardening characteristics as the metal plate of said base plate, applying said base coat to the metal plate of said base plate and drying the base coat at a temperature lower than a low aging temperature of the metal-plate;
performing press-working of said circular beads on the metal plate; and
age-hardening the metal plate while burning said base coat at the low aging temperature of the metal plate of said base plate.

2. The method of manufacturing a metal gasket, according to claim 1, wherein presetting of the circular beads is performed after the metal plate is age-hardened while burning said base coat at the low aging temperature of the metal plate of said base plate. - - -

3. The method of manufacturing a metal gasket, according to claim 1 or 2, wherein
said metal gasket further includes an auxiliary plate which is made of a metal plate having no rubber coating layer and has at least fluid passage holes and circular beads surrounding the fluid passage holes,
the metal plate having the low-temperature age-hardening characteristics is used as the metal plate of said auxiliary plate, and
the metal plate is age-hardened at the low aging temperature of the metal plate of said auxiliary plate after press-working of said circular beads on the metal plate of said auxiliary plate.

4. The method of manufacturing a metal gasket, according to any one of claims 1 to 3, wherein, as conditions of ageing treatment for the metal plate having said low-temperature age-hardening characteristics, the temperature is set to not less than 200°C and less than 250°C, and the length of time is set to 1 to 5 minutes.

5. The method of manufacturing a metal gasket, according to any one of claims 1 to 4, wherein the metal plate having said low-temperature age-hardening characteristics is a metastable austenitic stainless steel plate which induces a great deal of martensitic transformation by temper rolling at the final stage of manufacturing of the metal plate.

6. The method of manufacturing a metal gasket, according to any one of claims 1 to 5, wherein said metal gasket is a metal gasket for a cylinder head of an internal combustion engine.

## Patentansprüche

1. Verfahren zur Herstellung einer Metalldichtung, die eine Grundplatte zumindest mit Fluiddurchtrittslöchern und die Fluiddurchtrittslöcher umgebenden kreisförmigen Wülsten umfasst, wobei die Grundplatte durch das Bereitstellen einer Kautschuküberzugsschicht auf einer Oberfläche einer Metallplatte mit einer Grundschicht und einem Klebstoff dazwischen gebildet wird, wobei das Verfahren die folgenden Schritte umfasst:
das Aufbringen der Grundschicht auf die Metallplatte der Grundplatte unter Verwendung einer Metallplatte mit einer niedrigen Ausscheidungshärtetemperatur als die Metallplatte der Grundplatte und das Trocknen der Grundschicht bei einer niedrigeren Temperatur als der niedrigen Ausscheidungshärtetemperatur der Metallplatte;
das Durchführen des Pressformens der kreisförmigen Wülste auf der Metallplatte; und
das Aushärten der Metallplatte während des Brennens der Grundschicht bei der niedrigen Ausscheidungshärtetemperatur der Metallplatte der Grundplatte.

2. Verfahren zur Herstellung einer Metalldichtung nach Anspruch 1, worin die Voreinstellung der kreisförmigen Wülste durchgeführt wird, nachdem die Metallplatte während des Brennens der Grundschicht bei der niedrigen Ausscheidungshärtetemperatur der Metallplatte der Grundplatte ausscheidungsgehärtet wurde.

3. Verfahren zur Herstellung einer Metalldichtung nach Anspruch 1 oder 2, worin
die Metalldichtung ferner eine Hilfsplatte umfasst, die aus einer Metallplatte ohne Kautschuküberzugsschicht besteht, die zumindest Fluiddurchtrittslöcher und die Fluiddurchtrittslöcher umgebende kreisförmige Wülste umfasst,
die Metallplatte mit der Eigenschaft, bei niedriger Temperatur ausscheidungszuhärten, als die Metallplatte der Hilfsplatte verwendet wird und
die Metallplatte nach dem Pressformen der kreisförmigen Wülste auf der Metallplatte der Hilfsplatte bei der niedrigen Ausscheidungshärtetemperatur der Metallplatte der Hilfsplatte ausscheidungsgehärtet wird.

4. Verfahren zur Herstellung einer Metalldichtung nach einem der Ansprüche 1 bis 3, worin als Bedingungen der Aushärtungsbehandlung für die Metallplatte mit der Eigenschaft, bei niedriger Temperatur ausscheidungszuhärten, die Temperatur auf nicht weniger als 200 °C und weniger als 250 °C und die Dauer auf 1 bis 5 min eingestellt wird.

5. Verfahren zur Herstellung einer Metalldichtung nach einem der Ansprüche 1 bis 4, worin die Metallplatte mit der Eigenschaft, bei niedriger Temperatur ausscheidungszuhärten, eine metastabile austenitische Edelstahlplatte ist, die durch Nachwalzen im Endstadium der Herstellung der Metallplatte martensitische Umwandlung in hohem Maße auslöst.

6. Verfahren zur Herstellung einer Metalldichtung nach einem der Ansprüche 1 bis 5, worin die Metalldichtung eine Metalldichtung für einen Zylinderkopf eines Verbrennungsmotors ist.

## Revendications

1. Méthode de fabrication d'un joint métallique comprenant une plaque de base ayant au moins des trous de passage de fluide et des bourrelets circulaires entourant les trous de passage de fluide, la plaque de base étant formée en prévoyant une couche de revêtement en caoutchouc sur une surface de plaque métallique avec un revêtement de base et un adhésif intercalé entre elles, la méthode comprenant les étapes consistant à :
à l'aide d'une plaque métallique ayant des caractéristiques de durcissement par vieillissement à basse température en tant que plaque métallique de ladite plaque de base, appliquer ledit revêtement de base sur la plaque métallique de ladite plaque de base et faire sécher le revêtement de base à une température inférieure à une faible température de vieillissement de la plaque métallique ;
travailler à la presse lesdits bourrelets circulaires sur la plaque métallique ; et
faire durcir par vieillissement la plaque métallique tout en faisant cuire ledit revêtement de base à la faible température de vieillissement de la plaque métallique de ladite plaque de base.

2. Méthode de fabrication d'un joint métallique, selon la revendication 1, dans laquelle le préréglage des bourrelets circulaires est réalisé après que la plaque métallique a été durcie par vieillissement tout en faisant cuire ledit revêtement de base à une faible température de vieillissement de la plaque métallique de ladite plaque de base.

3. Méthode de fabrication d'un joint métallique selon la revendication 1 ou 2, dans laquelle :
ledit joint métallique comprend en outre une plaque auxiliaire qui est composée d'une plaque métallique n'ayant pas de couche de revêtement en caoutchouc et qui a au moins des trous de passage de fluide et des bourrelets circulaires entourant les trous de passage de fluide,
la plaque métallique ayant les caractéristiques de durcissement par vieillissement à faible température est utilisée en tant que plaque métallique de ladite plaque auxiliaire, et
la plaque métallique est durcie par vieillissement à la faible température de vieillissement de la plaque métallique de ladite plaque auxiliaire après avoir travaillé à la presse lesdits bourrelets circulaires sur la plaque métallique de ladite plaque auxiliaire.

4. Méthode de fabrication d'un joint métallique selon l'une quelconque des revendications 1 à 3, dans laquelle, en tant que conditions de traitement de vieillissement pour la plaque métallique ayant lesdites caractéristiques de durcissement par vieillissement à faible température, la température n'est pas inférieure à 200°C et inférieure à 250°C, et la durée est de 1 à 5 minutes.

5. Méthode de fabrication d'un joint métallique selon l'une quelconque des revendications 1 à 4, dans laquelle la plaque métallique ayant lesdites caractéristiques de durcissement par vieillissement à faible température est une plaque en acier inoxydable austénitique métastable qui induit une transformation martensitique importante par dressage par laminage à froid à l'étape finale de la fabrication de la plaque métallique.

6. Méthode de fabrication d'un joint métallique selon l'une quelconque des revendications 1 à 5, dans laquelle ledit joint métallique est un joint métallique pour une culasse d'un moteur à combustion interne.
